# EUROPEAN PATENT APPLICATION

(11) **EP 1 552 755 A1**
(43) Date of publication of application: **13.07.2005**
(21) Application number: 04075059.8
(22) Date of filing: 08.01.2004
(51) Int. Cl.: A23L 1/318, A23B 4/18, A23L 1/39

(54) **Meat marinade comprising fat and protein**

(71) Applicant: Van Goor's Slagerij V.O.F., 7921 AE Zuidwolde (NL)
(72) Inventor: van Goor, Johann Wilhelm, 7921 AE Zuidwolde (NL)
(74) Representative: Prins, Adrianus Willem, Mr. Ir.

(57) **Abstract**

This invention relates to a process for improving the texture and juiciness of a meat product intended for cooking, among others of those intended for frying. In particular, the invention relates to a novel marinade for improving the tenderness and mouthfeel of a meat product. Provided is a meat marinade comprising a fat and a protein. Said marinade may comprise a fat- and protein-containing dairy product, such as cooking cream. Also provided is a method for improving the tenderness of a meat product, comprising marinating said meat product with a marinade according to the invention.

## Description

This invention relates to a process for improving the texture and juiciness of a meat product intended for cooking, among others of those intended for cooking at high temperatures. In particular, the invention relates to a novel marinade for improving the tenderness and mouthfeel of a meat product. The invention also relates to marinated meat products.

During cooking of meat, especially at high temperatures, for instance deep-frying, water is exuded from the meat in considerable quantities. The texture of the meat thus becomes dry, heterogeneous and hard. Also, the meat yield diminishes as a result of the exudation (dehydration). To prevent these disadvantages and to obtain the desired tenderness and juiciness with an improved yield, polyphosphates are generally incorporated in the raw meat, typically in the form of a marinade. Marinades can add to tenderness and juiciness through retention of juices during storage and cooking. Marinades based on polyphosphates, including pyrophosphate, triphosphate, and metaphosphate, have a high buffering capacity at neutral to alkaline pH (pH 6.5 to 9.0) due to their polyanionic characteristics. US Patent 3,104,978 discloses the use of hydrated crystalline and glassy phosphates in meat curing compositions. US Patent 3,104,170 teaches that fresh or precooked poultry may be better preserved in the cooked state by soaking the uncooked poultry in sodium or potassium polyphosphates. The preferred polyphosphate is tripolyphosphate, but pyrophosphates and hexametaphosphates are also useful. In US Patent 3,689,283 a mixture of sodium tripolyphosphate and 10% sodium hexametaphosphate is preferred. US patent 3,462,278 teaches cooking old poultry (more than 10 months old) in a solution of the same alkali metal polyphosphates. US Patent 3,573,062 teaches that coarsely chopped muscle meat can be bonded with polyphosphates to fabricate cuts of meat. EP0397590 discloses a clear, aqueous polyphosphate solution suitable for injection into meat products. Injection or infusion of pyrophosphates increases the pH of meat and improves meat quality by assisting solubilization of myosin and increasing uptake and retention of water. However, polyphosphate addition is unpopular among consumers because, although the polyphosphates retain water during cooking and ensure the desired tenderness, they generally conceal the desired fibrous texture of the meat, giving it a texture and sensorial characteristics of patty-type products, like sausages. In addition, the use of polyphosphates to avoid dehydration and hardening of the meat is being increasingly opposed at the nutritional level. Thus, there is a clear need for alternative meat marinades which do not rely on polyphosphates and which are capable of preserving the tenderness of (cooked) meat products.

It has now been found that a surprisingly good meat tenderization is achieved if, prior to cooking, a meat product is treated with a marinade comprising a fat and protein. Without wishing to be bound by theory, it is believed that the fat and protein in a marinade according to the invention are absorbed by the meat such that, due to the softening effects of the fat and the water-retaining capacity of the protein, the original juicy and tender structure of the meat is retained, even during cooking at high temperatures such as deep-frying.

According to the invention, said fat may be present in said marinade in an amount of about 2 -25 percent by weight (w%) of the marinade, preferably 5-20 w%, more preferably 7-15 w%, most preferably 9-13 w%. The protein content of a marinade can be about 0.05 -10 percent by weight (w%) of the marinade, preferably 0.8 -5 w%, more preferably 1-4 w%.

The fat can be an animal fat or a plant fat, also referred to as a vegetable fat. An animal fat is generally high in saturated fatty acids. Suitable animal fats comprise milk fats and fish fats. Fats are made up of three elements, carbon, oxygen and hydrogen. These elements can make up molecules of fatty acids and glycerol, which combine to form fat molecules known as triglycerides. There are at least 40 different fatty acids. Triglycerides make up to 98% of total milk fat by weight. A marinade of the invention may comprise unsaturated fatty acids, e.g. omega-3 or -6 fatty acids, which can for example be found in fish fat.

Useful vegetable fats also comprise oils of vegetable origin, e.g. those used for cooking, such as olive oil, cottonseed oil, corn (maize) oil, sesame oil, linseed (flax) oil, sunflower oil, palm oil and the like. Oils and fats vary in both their appearance and individual properties due to the differences in the types and proportions of the various fatty acids present. Although chemically similar, a fat is solid or semi-solid at 'room' temperature, while an oil remains liquid.

Likewise, the protein can be an animal protein or a protein of plant or vegetable origin. Examples of useful proteins are milk protein and soy protein. Milk protein consists of casein (β-casein,αs1-casein, αs2-casein, K-casein), whey proteins (β-lactoglobulin, α-lactalbumin, immunoglobulins, bovine serum albumin, Glycomacropeptide). Other minor proteins include as lactoferrin and enzymes (e.g. lactoperoxidase). Casein, the principal protein of milk, is that fraction of raw skim milk which is precipitated by acidifying to pH 4.6 - 4.7. It comprises about 80% of the protein of milk, the amount present in milk varying from about 2.6 to 3.4%, depending upon the breed of cow that produced the milk. It is present in milk as a colloidal suspension of complex particles called micelles. The protein in a marinade according to the invention may be stabilized, for example by heat treatment such as ultra high temperature (UHT) treatment.

In one embodiment, a marinade comprises a milk fat and a milk protein. These marinades are conveniently prepared using a dairy product that contains milk fat and milk protein. Dairy products are made of milk from a mammal, such as a cow, a sheep, a goat or a horse. The average gross composition of cow's milk is approximately 3.7 percent fat, 3.3 percent protein, 4.7 percent lactose, 0.7 percent ash and 87.6 percent water. Sheep milk is relatively rich in fat and protein with a fat content of approximately 6.5-7.0% and a protein content of around 5.5%. The protein and fat content of goat milk are roughly comparable to that of cow milk, about 2.9% and 3.9%, respectively. Compared to other suitable dairy products, cow's milk products can be most easily commercially obtained at relatively low costs. A marinade therefore preferably comprises a cow's milk product, optionally diluted with a liquid (e.g. water) to achieve the desired fat- and protein content. During the industrial separation of whole (cow's) milk, there are generally two streams produced: the fat-depleted stream, which produces among others the low-fat beverage milks, and the fat-rich stream, the cream. This usually comes off the separator with fat contents in the 35-45% range. A product known as 'plastic' cream can be produced from certain types of milk separators, which has a fat content approaching 80%. For retail cream products, the fat content is normally standardized to around 35% (heavy cream for whipping), 18-20% or 10% (cream for coffee or cereal). Higher fat creams are also produced for retail sale, e.g. a product known as double cream has a fat content of 55%. A marinade in accordance with the invention may comprise a (diluted) milk product from the fat-rich stream. For example, it is selected from the group consisting of cream, double cream, whipping cream, whole milk, half and half cream (milk cream) and whole evaporated milk. Suitable fat- and protein-containing milk products comprise those routinely used for cooking, more specifically those used to prepare (cream) sauces. Especially suitable products are commercially available, for instance a milk product referred to as "cooking cream" or "cook's cream". Cooking cream has a fat content of approximately 20% and can be used for the preparation of hot or warm dishes, sauces and soups. Cooking cream is acid stable and does not curdle. For example, a marinade according to the invention may be prepared using Hollandia Koksroom UHT, which contains 98.4% cream, 20% fat, modified starch, stabilisers and emulsifier. In an other embodiment, a milk product sold under the trade name "Room Culinair" by Campina BV, The Netherlands (www.campina.com) is used. This product contains 2.5 gr protein, 5.0 gr carbohydrates and 20 gr fat per 100ml. Also suitable are milk products sold by Unilever BV under the brand name Blue Band Finesse, which are based on a mixture of cow's milk and vegetable fat and have a fat content in the range of 15-20%.

The use of a milk or dairy product for marinating and/or pickling meat has been previously reported. Usually, it comprises the use of yoghurt or other fermented milk products. For example, US patent 6,582,751 reports injection of a meat product with a liquid fermented milk product. EP0442361 discloses incorporation of denatured milk serum (whey) proteins into the meat to improve its texture. Fermented milk products are for example yoghurt, buttermilk, soured cream milk, soured milk, fermented whey, kefir and crème fraiche. When used for marinating meat, the pH of the fermented milk product is typically in the range of 4.8-5.1. By maintaining the pH of the treated product as a whole above the isoelectric point of the meat, the loss of moisture and water from the product is minimised. In contrast, a marinade of the invention does not rely on this pH mechanism by using a (low pH) fermented milk product but, instead, it is based on the incorporation of fat and protein into the meat. What is more, it preferably comprises a non-fermented milk product because marination with a fermented milk product would add an unpleasant, sour taste to the meat.

Meat marinades comprising milk protein are known. For example, Shand and McCurdy investigated the effect of milk protein on salt/phosphate-based marination systems (Meat Marketing and Technology, 1996, 4(1) and Proceedings of the 41^{st} Annual International Congress of Meat Science and Technology, San Antonio, August 1995, Volume 2). The marinades under investigation did not contain any fat. It was concluded that the addition of milk protein hydrolysate had a toughening effect on pork. These findings underscore that presence of a fat as well as a protein in a marinade of the invention is important to achieve the desired tenderness and juiciness of the meat. Surprisingly, it is shown herein that a meat marinade comprising both a milk protein and a (milk) fat give very good results.

Meat marinades comprising fat (but no protein) are also known. WO00/65937 discloses a multifunctional marinade for meat or fish comprising a flavoring agent, a browning agent and a partially hydrogenated fat.

In one embodiment of the invention, a marinade comprises a fat- and protein-containing milk-free substitute. An advantage of such a marinade is that it suitable for consumption by people with cow's milk allergy, also known as lactose intolerance. Cow's milk is a common cause of food allergy in children. Around 1 in 50 babies are allergic to cow's milk and dairy products. Although most children out-grow cow's milk allergy by the age of 4 years, persistent milk allergy may sometimes occur. Treatment of cow's milk allergy involves elimination of cow's milk and its products from the diet and, if possible, substitution with an appropriate milk-(protein) free product. Another milk-related disorder in humans is lactose intolerance. Lactose intolerance is the inability to digest lactose, a type of sugar found in milk and other dairy products. Lactose intolerance is very common in adults and is not dangerous. Many adults have some degree of lactose intolerance by age 20 (approximately 30 million Americans). The symptoms include diarrhoea, vomiting, stomach pain and gas, which are similar to some of the symptoms of milk allergy. This condition is uncomfortable but not dangerous, and does not cause rashes or anaphylaxis. Treatment involves avoidance of dairy products containing lactose and substitution with a lactose-free milk. A cow's milk-free or lactose-free meat marinade according to the invention comprises a fat- and protein- containing plant-based product, preferably a soy-milk based product. A suitable commercially available fat-containing plant-based product is sold under the name "Alpro soja cuisine" (www.alprosoja.com). This product contains 18% vegetable fat and 2 % protein but it does not contain any cow's milk protein. Other suitable cow's milk substitutes may be based on rice milk, oat milk, almond milk, sesame milk, coconut milk, goat's milk and sheep's milk and horse's milk.

When using a milk product for preparing a marinade of the invention, (traces of) the white colour of the milk product will be apparent in the marinated meat product. In many cases, e.g. when marinating so-called white meat (e.g. poultry), or when marinating any type of meat which is subsequently covered with a breading mixture, the white colour of the marinated meat product does not affect the attractiveness of the meat. However, in other cases, for example when marinating a piece of beef which should retain its natural colour, it is preferred to use a meat marinade that is essentially transparent. A transparent meat marinade according to the invention is easily prepared by mixing suitable amounts of fat and protein (see section above).

In a further aspect of the invention, a method is provided for preparing a meat marinade according to the invention. In one embodiment, a liquid marinade is prepared by mixing the components the marinade, i.e. a liquid, a fat and a protein and optionally a flavouring agent. Furthermore, an emulsifier may be included in the marinade to aid in dispersing fat in a water-based marinade. Suitable emulsifiers include those commonly used in the food industry, for example egg yolk or lecithin.

According to the invention, a marinade may further comprise a flavouring agent. Said flavouring agent, when present in the marinade, can be any ingredient which imparts flavour or taste to the marinated meat product. Flavouring agents useful in the invention include flavour extracts, flavour concentrates, flavour enhancers, seasonings, herbs, spices, salt, pepper, onion powder, garlic powder, savoury powders and commercially available flavourings, such as barbecue, cajun and teriyaki. The flavouring agent can be in a dried (powdered or pulverized) or liquid (e.g. oil-based). As said, it is most convenient when preparing a marinade according to the invention to use a commercial liquid product that contains both the desired protein and fat components, for example a (cow's milk) dairy product or a substitute thereof. Depending on the fat- and protein content of the product, it can be diluted with a liquid, such as water, to achieve a marinade with the desired fat- and protein content. In one embodiment, cooking cream is used to conveniently provide the marinade with protein and fat. Because cooking cream contains approximately 20% fat and approximately 2.8% protein, it may be further diluted with water. For example, the cooking cream can be mixed with about an equal volume of water to yield a marinade according to the invention comprising about 10% fat and about 1.4% protein. It will be clear that other dairy products can be diluted according to the same principle. On the other hand, products which have a fat- and protein content that lies within the range of a marinade according to the invention may be used as such without any dilution.

A marinade according to the invention can also be prepared by reconstituting a powdered marinade comprising fat and protein, and optionally a flavouring agent, with a liquid. For example, the powdered marinade is mixed with a suitable amount of water to achieve a marinade with the desired fat- and protein content.

In yet a further embodiment, the invention provides a method for improving the tenderness of a meat product, comprising marinating said meat product with a marinade according to the invention. The term "marinating" as used herein refers to let a meat product stand in the marinade before cooking.

The meat product may be any type of meat product, including a monolithic piece of meat as well as mechanically processed meat such as minced or comminuted meat and meat emulsions. The term 'monolithic' embraces whole muscle pieces of meat, as well as smaller, but nevertheless recognizable pieces such as natural butcher cuts, slices and strips of meat and cubed or diced meat. A cubed piece of meat refers to meat which is cut into small square pieces. Diced meat refers to tiny, 1 cm³ or smaller pieces or cubes. In a preferred embodiment, said meat product is a monolithic piece of meat, that is a piece of meat that retains its natural structure and consistency. Explicitly included are chopped pieces of meat, i.e. meat cut into (nearly uniform) bite-size or snack-size pieces which can be served at a party or as a snack. These can have any shape or form, for example the shape of a nugget or a finger. Preferably, a small piece of (marinated) meat is achieved by sectioning a larger piece of (marinated) meat into smaller sections such that there is a minimal loss of meat in the form of meat scraps and trimmings. This can be achieved by cutting up a monolithic piece of meat into (uniform) smaller pieces along essentially straight, i.e. non-curved, lines. Preferably, the cutting lines are parallel. For instance, a roughly rectangular piece of meat is cut into smaller pieces which have four corners, e.g. which have a shape resembling a square, a rectangle or a parallelogram. For example, meat is cut into pieces with a length of 2.5-5 cm, a width of 1.5-3 cm and a thickness of 0.3-1 cm. Of course, it is also possible to cut the meat into three-cornered pieces, i.e. triangular pieces. Cutting can be performed manually or mechanically. The invention herewith provides for a piece of meat, preferably a bite-size or snack-size piece of meat, which has at least two essentially, preferably at least three, preferably four straight sides.

Small pieces of meat are relatively prone to losing water during cooking at high temperatures, such as during pan frying or deep frying. This is because of a higher surface to volume ratio when compared to larger pieces of meat. Thus, a marinade according to the invention is advantageously used to improve the tenderness of a relatively small piece of meat. Also included are reformed pieces of meat, such as steaks. In one embodiment, said piece of meat has a volume of 1-50 cm³, preferably 1- 15 cm³, more preferably 2.5-7 cm³ .

As said, any kind of meat product can be marinated with a marinade as provided herein. The meat product is for example a pork, beef, lamb, game, mutton, veal or poultry meat product. The meat product may be boneless or it may contain bones. In a preferred embodiment, it is a boneless meat product. The marinade according to the invention gives the meat product a soft and rich mouthfeel, and is therefore particularly advantageous for marinating meat products which have from itself, especially after cooking, a relatively dry structure, e.g. meat products with a low fat content. Furthermore, a meat product that has been marinated with a marinade as provided herein does not have the watery and spongy mouthfeel and the taste of phosphates as is encountered when using conventional phosphate-based marinades. In fact, a marinade according to the invention comprising fat and protein, but not comprising polyphosphates, can be used to improve the texture and taste of essentially any type of meat.

In one embodiment, the invention provides a method for tenderising a meat product called "schnitzel'. Schnitzel is the German word for "cutlet" and typically refers to a piece meat that is dipped in egg, breaded and fried. Wiener Schnitzel is a veal cutlet prepared in this manner. In a preferred embodiment, bite-size schnitzel-type meat products are marinated with a marinade according to the invention, in particular small pieces of schnitzel (also known as "schnitzel chips") made of pork meat. In another preferred embodiment, an intact meat cutlet is first marinated and thereafter cut into smaller pieces. Marination can be conveniently achieved by injecting said meat with the marinade (see below).

Treatment with the marinade is preferably carried out at a low temperature of 0°C to 10°C. If a frozen meat product is to be marinated, it is preferably first warmed to a temperature of -3°C to 4°C. Meats are marinated by either of two methods. In one embodiment, marinating a meat product with a marinade of the invention comprises mechanical processing. Herein, a meat product is churned, mixed, tumbled or agitated with a fat-and protein-containing marinade as provided herein, preferably until the marinade is absorbed by the meat product. The meat can be placed into a tumbler, the marinade added, and the meat pieces tumbled, optionally under vacuum, until they absorb the solution. Equipment for the mechanical processing may simply comprise a rotary tumbler, preferably equipped with a vacuum pump, in which the meat product to be marinated can be tumbled in the presence of a suitable amount of a marinade according to the invention. In one embodiment, a meat product is contacted (e.g. tumbled) with an amount of marinade of around 10-50 per cent by weight (w%) of said meat product, preferably around 15-40 w%, more preferably around 15-30 w%. Preferably, an amount of marinade is chosen which can be at least partially absorbed by the meat, more preferably an amount which can be fully absorbed by the meat. For example, 100 kg of meat, preferably cut into pieces, is tumbled with 25 litre of a fat-containing meat marinade according to the invention to provide the meat with a tenderising marinade. Thereafter, any non-absorbed or excess marinade can be collected and re-used for a subsequent meat treatment. Said tumbling may be performed for various periods of time, depending on the tumbling speed and the type and/or size of the meat. Especially with relatively small (e.g. bite-size) pieces of meat, tumbling is a preferred method of contacting meat with a marinade according to the invention.

In another embodiment, the marinade is injected into the meat, for example using a single needle injector or a multi-needle injector. A suitable multi-needle injector is the injector that is commercially available from Möller and Co. under the trade name Pökelmat. The marinade may be injected at a pressure of about 0.9 to 3.0 bar, depending on the type of meat and injection rate. The meat may be injected more than once. In some embodiments, the meat may be injected using tenderising needles. The injected marinade may be distributed further throughout the piece of meat by mechanically tenderising and/or tumbling. As a further advantage, the mechanical processing of the meat assists in disrupting the structure of the meat, especially proteins, which may thus be opened. As a consequence, the liquid marinade as well as free water within the meat become properly incorporated within the meat structure. The injection method delivers rapid, deeply infused marinade solutions, evenly dispersing them throughout the cut. The thinner the cut, the more rapidly dispersion of the marinade will occur. Some manufacturers follow the injection with a tumbler step to more rapidly achieve marinade dispersion in thicker cuts.

The surface area of the meat and the condition of the meat cut have a large effect on the marinade process, as the area determines the relative uptake of the marinade. The muscle structure varies between different types of meat, yet the greater the exposure to the solution, the more efficient the absorption will be. Cut steaks or kebabs present a greater surface area, and thus will require less marinating time. Large cuts of beef, such as roasts, can be injected with marinade and then tumbled for optimum marinating. The beef can then be cut into sections. Systems combining rapid injection, followed by a vacuum tumbling, are capable of turning out products at a relatively high rate and quality. Equilibration of the marinade within the meat is reached most efficiently with this technique, although injection systems are expensive and costly to maintain. The combination of injection and tumbling yields a well-balanced marinade profile in the product. The injection method, by itself, is most efficient in terms of time and cost savings.

Typically, skinless and boneless pieces of meat (e.g. chicken breasts) can be tumbled, because they are thin and relatively absorbent. Meat pieces with bone and skin are easier to treat with injection. For instance, chicken wings are often injected, due to the ease of the operation. The injector systems have spring-loaded needles, so if bones are encountered, needles won't break.

Optionally, following marinating the meat product, it is left to stand for a certain period of time such that the marinade is distributed even further throughout the piece of meat. For example, pieces of meat which have been tumbled for 5-10 minutes are thereafter left to stand for several hours. The marinated meat product is preferably left to stand at a temperature of 0°C to 10°C.

It has been found that by contacting a monolithic piece of meat with a marinade according to the invention, using either injection and/or mechanical processing, the pores and cavities within the meat become filled with the fat- and protein-containing marinade. If higher proportions of marinade are used, the piece may become essentially saturated with marinade. The invention thus provides a meat product having improved tenderness and organoleptic (mouthfeel) properties. Meat marinated and processed in accordance with the invention will typically remain tender and juicy after cooking.

The marinated meat product may be directly packaged, refrigerated, frozen or even sterilized. The product may be marinated and optionally cut prior to packaging, freezing or refrigerating. As a further alternative, the product may be coated or breaded and then packaged. In yet another embodiment, the marinated meat product is at least partially cooked prior to packaging. Depending on the type of meat and the size of the pieces, cooking of a marinated meat product may be brief or prolonged or may even be carried out under pressure. Cooking comprises grilling, steam cooking, oven cooking in a conduction or a convection ovens, deep-frying, pan frying and microwaving.

Also provided herein is a meat product that is marinated according to the invention. Said marinated meat product may be a fresh meat product or a refrigerated or frozen meat product. Furthermore, a cooked or pre-cooked marinated meat product is provided herein. The marinated, pre-cooked meat product is essentially ready for consumption and only requires minimal further handling by a consumer or a retailer of the product prior to consumption of the product, for instance only a brief period of heating in a microwave oven.

A further aspect relates to the use of a marinade according to the invention to improve the tenderness and juiciness of a meat product.

## Claims

1. A meat marinade comprising a fat and a protein.

2. Marinade according to claim 1, wherein said fat is present in said marinade in an amount of about 2 -25 percent by weight (w%) of the marinade, preferably 5-20 w%, more preferably 7-15 w%, most preferably 9-13 w%.

3. Marinade according to claim 1 or 2, wherein said protein is present in said marinade in an amount of about 0.05 -10 percent by weight (w%) of the marinade, preferably 0.8 - 5 w%, more preferably 1-4 w%.

4. Marinade according to any one of claims 1 to 3, wherein said fat is an animal fat.

5. Marinade according to any one of claims 1 to 3, wherein said fat is a plant fat.

6. Marinade according to any one of claims 1 to 5, wherein said protein is an animal protein.

7. Marinade according to any one of claims 1 to 5, wherein said fat is a plant protein.

8. Marinade according to any one of claims 1 to 7, wherein said marinade comprises a dairy product, preferably a non-fermented dairy product.

9. Marinade according to claim 8, wherein said dairy product is selected from the group consisting of cream, double cream, whipping cream, whole milk, half and half cream (milk cream) and whole evaporated milk.

10. Marinade according to any one of claims 1 to 9, further comprising a flavouring agent, preferably a flavouring agent selected from the group consisting of favour extracts, flavour concentrates, flavour enhancers, seasonings, herbs, spices, salt, pepper, onion powder, garlic powder, savoury powders and commercially available flavourings.

11. A method for preparing a meat marinade according to any one of claims 1 to 10, comprising combining the components of the marinade.

12. A method for improving the tenderness of a meat product, comprising marinating said meat product with a marinade according to any one of claims 1 to 10.

13. A method according to claim 12, wherein said marinating comprises churning, mixing, tumbling or agitating said meat product with the marinade.

14. A method according to claim 12, wherein said marinating comprises injecting said meat product with said marinade, optionally followed by tumbling said meat product.

15. A method according to any one of claims 12 to 14, wherein said meat product is marinated with an amount of marinade of around 10-50 per cent by weight (w%) of said meat product, preferably around 15-40 w%, more preferably around 15-30 w%.

16. A method according to any one of claims 12 to 15, wherein said meat product is a pork, beef, lamb, game, mutton, veal or poultry meat product, preferably a monolithic meat product.

17. A method according to any one of claims 12 to 16, wherein said meat product is a fresh, a refrigerated or a frozen and thawed meat product.

18. A method according to any one of claims 12 to 17, wherein said meat product is in the form of slices, cutlets or cubes.

19. A method according to any one of claims 12 to 18, wherein said meat product is a bite-size or snack-size meat product.

20. A method according to any one of claims 12 to 19, wherein said meat product is a monolithic piece of a schnitzel, preferably a schnitzel made of pork meat.

21. A method according to any one of claims 12 to 20, further comprising refrigerating or freezing said marinated meat product.

22. A method according to any one of claims 12 to 21, further comprising cooking said marinated meat product.

23. A method according to claim 22, wherein said cooking comprises grilling, steam cooking, oven cooking, deep-frying, pan frying or microwaving.

24. Marinated meat product, preferably a marinated refrigerated, frozen and/or cooked meat product obtainable by a method according to any one of claims 12 to 23.

25. Use of a marinade according to any one of claims 1 to 10.
